# EUROPÄISCHE PATENTSCHRIFT

(11) **EP 3 342 839 B1**
(45) Veröffentlichungstag und Bekanntmachung des Hinweises auf die Patenterteilung: **21.08.2024**
(21) Anmeldenummer: 17203051.2
(22) Anmeldetag: 22.11.2017
(51) Int. Cl.: C09K 3/14, B01J 2/20, C04B 35/111

(54) **VERFAHREN ZUR HERSTELLUNG VON SCHLEIFMITTELTEILCHEN**
METHOD FOR THE PRODUCTION OF ABRASIVE PARTICLES
PROCÉDÉ DE FABRICATION DE PARTICULES ABRASIVES

(30) Priorität: 20.12.2016 AT 511582016
(43) Veröffentlichungstag der Anmeldung: 04.07.2018
(73) Patentinhaber: Tyrolit - Schleifmittelwerke Swarovski AG & Co K.G., 6130 Schwaz (AT)
(72) Erfinder: HIRSCHMANN, Martin, 6113 Wattenberg (AT)
(74) Vertreter: Torggler & Hofmann Patentanwälte - Innsbruck

(56) Entgegenhaltungen:
- EP-A2- 0 395 088
- WO-A1-01/23321
- WO-A1-2013/106597
- WO-A1-2013/177446
- WO-A1-99/54425
- WO-A1-99/61389
- US-A1- 2012 168 979

## Beschreibung

Die Erfindung betrifft ein Verfahren zur Herstellung von Schleifmittelteilchen und die nach dem Verfahren hergestellten Schleifmittelteilchen. Die Erfindung betrifft weiterhin ein Verfahren zur Herstellung eines Schleifwerkzeugs für die Bearbeitung metallischer Materialien sowie das nach diesem Verfahren hergestellte Schleifwerkzeug.

Aus dem Stand der Technik sind unterschiedliche Verfahren zur Herstellung von Schleifmittelteilchen bekannt. Beispielsweise wird in der DE 10 2012 023 688 A1 ein Verfahren offenbart, bei welchem ein formgebendes Werkzeug zur Festlegung der Form der Schleifmittelteilchen zum Einsatz kommt. Hierbei kann es sich beispielsweise um eine Strangpressvorrichtung in Kombination mit Presswalzen, welche eine bestimmte Geometrie an ihrer Oberfläche aufweisen, handeln. Die Zielsetzung bei diesem Verfahren besteht dabei darin, Schleifmittelteilchen mit einer möglichst präzisen und reproduzierbaren Geometrie herzustellen.

Nachteilig dabei ist, dass dies mit einem hohen technischen Aufwand einhergeht. Meist handelt es sich auch um sehr wartungsintensive Verfahren, bei denen ein signifikanter Anteil der Schleifmittelteilchen ausgesondert werden muss, da er nicht die geforderte präzise Geometrie aufweist.

Ein weiterer Nachteil besteht darin, dass mit den aus dem Stand der Technik bekannten Verfahren nur Schleifmittelteilchen mit einer festgelegten und damit nicht oder nur schwer veränderbaren Geometrie hergestellt werden können.

Weitere Verfahren zur Herstellung von Schleifmittelteilchen werden in der WO 99/61 389 A1, der WO 01/23 321 A1 und der WO 99/54 425 A1 beschrieben.

Die Aufgabe der vorliegenden Erfindung besteht darin, ein vereinfachtes und flexibleres Verfahren zur Herstellung von Schleifmittelteilchen, die damit hergestellten Schleifmittelteilchen, ein Verfahren zur Herstellung eines Schleifwerkzeugs für die Bearbeitung metallischer Materialien, bei welchem die erfindungsgemäß hergestellten Schleifmittelteilchen zum Einsatz kommen, sowie ein mittels dieses Verfahrens hergestelltes Schleifwerkzeug anzugeben. Diese Aufgaben werden durch die Merkmale der unabhängigen Ansprüche 1, 10, 13 und 14 gelöst.

Das erfindungsgemäße Verfahren zur Herstellung von Schleifmittelteilchen umfasst somit die folgenden Verfahrensschritte
i. Bereitstellen eines zumindest Aluminiumhydroxid enthaltenden Ausgangsgemischs, welches durch Wärmebehandlung zumindest in Aluminiumoxid überführbar ist,
ii. Extrusion des Ausgangsgemischs zu einem Extrudat, vorzugsweise in Form eines Strangs mit einem im Wesentlichen kreisförmigen Querschnitt oder eines Bands mit einem im Wesentlichen rechteckigen Querschnitt,
iii. Spanen des Extrudats mit geometrisch bestimmten Schneiden vorzugsweise Raspeln, in Zwischenteilchen mit einer uneinheitlichen Form und/oder Größe,
iv. Wärmebehandlung der Zwischenteilchen, wobei die Zwischenteilchen in Schleifmittelteilchen, welche Aluminiumoxid enthalten, wobei die Schleifmittelteilchen eine uneinheitliche Form und /oder Größe aufweisen, überführt werden,
wobei das Spanen des Extrudats mittels wenigstens eines Rotationskörpers, vorzugsweise in Form einer Trommel oder Scheibe, wobei der Rotationskörper mit einer veränderbaren Rotationsgeschwindigkeit betrieben wird und/oder wenigstens eines plattenförmigen Körpers erfolgt, wobei an der Oberfläche des wenigstens einen Rotationskörpers bzw. plattenförmigen Körpers die geometrisch bestimmten Schneiden ausgebildet sind, vorzugsweise wobei die Schneiden durch Stanzen ausgebildet wurden.

Eine wesentliche Erkenntnis, auf welcher das erfindungsgemäße Verfahren basiert, besteht also darin, dass es gerade nicht wie im Stand der Technik notwendig ist, Schleifmittelteilchen mit einer einheitlichen präzisen Geometrie und Größe herzustellen. Es hat sich vielmehr herausgestellt, dass Schleifwerkzeuge, welche man mittels der nach dem erfindungsgemäßen Verfahren hergestellten Schleifmittelteilchen herstellt, eine ausgezeichnete Schleifleistung erbringen. Der Grund hierfür ist, dass im Zuge der Abnutzung des Schleifwerkzeugs immer wieder in unterschiedliche Raumrichtungen weisende frische Schnittkanten unterschiedlicher Gestalt angeboten werden, welche einen besonders effizienten Materialabtrag ermöglichen.

Es sei darauf hingewiesen, dass die Technik, ein zumindest Aluminiumhydroxid enthaltendes Ausgangsgemisch durch Wärmebehandlung zumindest in Aluminiumoxid zu überführen bereits seit längerem bekannt ist. In diesem Zusammenhang sei auf den sogenannten "Sol-Gel-Prozess" verwiesen. Dabei wird ein Ausgangsgemisch verwendet, welches zumindest Aluminiumhydroxid enthält. Aluminiumhydroxid kann in unterschiedlichen Modifikationen vorliegen. Im Zusammenhang mit der gegenständlichen Erfindung kommt bevorzugt pulverförmiges Böhmit (α-AlOOH) zum Einsatz. Weiterhin bevorzugt wird das Böhmit in weiterer Folge unter Zugabe von Wasser und Beimischung eines Peptisators, z.B. Salpetersäure, in ein klares Sol überführt. Anschließend wird bevorzugt durch die weitere Zugabe einer Säure, z.B. Salpetersäure, oder einer Nitratlösung, eine Reaktion zum Gel, d.h. eine Dehydratation und Polymerisation, eingeleitet. Durch die Gelierung liegt das Böhmit in einer sehr homogenen Verteilung vor. In einem anschließenden Arbeitsschritt kann freigesetztes Wasser verdampft werden. Im Zuge einer sich daran anschließenden Wärmebehandlung bei einer Temperatur zwischen 400 °C und 1200°C, bevorzugt bei einer Temperatur zwischen 800 °C und 1000 °C, kann das Aluminiumhydroxid in ein Aluminiumoxid der Übergangsphase α-Al₂O₃ überführt werden. Bei der Reaktion von Böhmit zu werden Stickstoff als Rückstand der Säure und Wasser freigesetzt. Diese Niedertemperaturfeuerung wird auch als Kalzinieren bezeichnet. In einem letzten Schritt kann dann eine weitere Wärmebehandlung in Form von, vorzugsweise drucklosem, Sintern durchgeführt werden. Dieser Schritt erfolgt bevorzugt bei einer Temperatur zwischen 1200 °C und 1800 °C, besonders bevorzugt bei einer Temperatur zwischen 1200 °C und 1500 °C. In Abhängigkeit des Ausgangsgemischs kann es vorkommen, dass dabei neben Aluminiumoxid (typischerweise als alpha-Aluminiumoxid) Nebenphasen, wie z.B. Spinell, entstehen. Diesem Sachverhalt wird durch den Ausdruck "zumindest in Aluminiumoxid" Rechnung getragen.

Unter "Extrusion" versteht man eine Verfahrenstechnik, bei welcher feste bis dickflüssige härtbare Materialien unter Druck kontinuierlich aus einer formgebenden Öffnung herausgepresst werden. Dabei entstehen Körper mit einem Querschnitt der Öffnung, Extrudat genannt. Im vorliegenden Fall werden bevorzugt Extrudate in Form eines Strangs mit einem im Wesentlichen kreisförmigen Querschnitt oder eines Bands mit einem im Wesentlichen rechteckigen Querschnitt erzeugt.

Hinsichtlich des Spanens des Extrudats ist allgemein auszuführen, dass man die spanenden Fertigungsverfahren grundsätzlich in zwei Teile gliedert: Das "Spanen mit geometrisch bestimmter Schneide" bezieht sich auf Verfahren, bei denen die Anzahl und Geometrie der Schneiden bekannt ist. Das "Spanen mit geometrisch unbestimmter Schneide" dagegen bezieht sich auf Verfahren, bei denen weder die Geometrie der Schneiden noch ihre Anzahl bekannt ist. Im vorliegenden Fall wird das Extrudat mit geometrisch bestimmten Schneiden gespant und zwar in Zwischenteilchen mit einer uneinheitlichen Form und/oder Größe.

Die Gruppe "Spanen mit geometrisch bestimmter Schneide" lässt sich weiter unterteilen, beispielsweise in Fräsen, Hobeln, Schaben oder Raspeln. Beim vorliegenden erfindungsgemäßen Verfahren kommt bevorzugt ein Raspeln des Extrudates zum Einsatz, wobei man unter Raspeln ein Spanen mit wiederholter gerader oder kreisförmiger Schnittbewegung und geringer Spanungsdicke mit einem Werkzeug mit Zähnen geringer Höhe die dicht aufeinander folgen, versteht. Im Küchenbereich ist ein klassisches Beispiel für Raspeln die Käsereibe.

Erfindungsgemäß erfolgt das Spanen des Extrudats mittels wenigstens eines Rotationskörpers, vorzugsweise in Form einer Trommel oder Scheibe, und/oder wenigstens eines plattenförmigen Körpers, wobei an der Oberfläche des wenigstens einen Rotationskörpers bzw. plattenförmigen Körpers die geometrisch bestimmten Schneiden ausgebildet sind, erfolgt, vorzugsweise wobei die Schneiden durch Stanzen ausgebildet wurden. Dabei kann es weiterhin vorgesehen sein, dass der wenigstens eine Rotationskörper bzw. plattenförmige Körper zumindest beim Spanen des Extrudats eine oszillierende Bewegung ausführt.

Das erfindungsgemäße Verfahren zur Herstellung von Schleifmittelteilchen zeichnet sich gegenüber dem Stand der Technik nicht nur durch seine Einfachheit und den geringeren Wartungsbedarf aus, sondern ermöglicht es auch, die Form und/oder Größe der Zwischenteilchen bzw. der nach dem Sintern vorliegenden Schleifmittelteilchen leicht und flexibel - auch während der Durchführung des Verfahrens - zu variieren. Hierzu bietet das Verfahren eine Reihe von Ansatzpunkten:
Wenn das Spanen des Extrudats mittels wenigstens eines Rotationskörpers erfolgt, wird der Rotationskörper mit einer veränderbaren Rotationsgeschwindigkeit betrieben.

Weiterhin können die Abmessungen der Schleifmittelteilchen dadurch verändert werden, dass die Querschnittsform des Extrudats vor dem Spanen verändert wird. Hierzu können beispielsweise gegenläufig rotierende Walzen zum Einsatz kommen. Über den Abstand der Walzen lässt sich in einfacher Weise die Querschnittsform des Extrudats verändern. Dies hat natürlich auch einen unmittelbaren Einfluss auf die Form und/oder Größe der beim Spanen des Extrudats erzeugten Zwischenteilchen.

Ein weiterer Ansatzpunkt, die Abmessungen der Schleifmittelteilchen zu beeinflussen bzw. zu steuern, besteht darin, das Extrudat dem Verfahrensschritt des Spanens mit einer veränderbaren Zustellgeschwindigkeit und/oder in einer oszillierenden Bewegung zuzuführen. Im Falle einer oszillierenden Bewegung stellt sich eine bestimmte Länge des dem Spanwerkzeugs zugeführten Extrudats ein.

Weiterhin kann es auch vorgesehen sein, dass die durch das Spanen erzeugten Zwischenteilchen vor der Wärmebehandlung in einem weiteren Verfahrensschritt, vorzugsweise mittels einer Schneidevorrichtung, zerkleinert werden. Anstelle einer Schneidevorrichtung können auch andere Zerkleinerungsvorrichtungen zum Einsatz kommen, die beispielsweise auch ein Brechen und/oder Zerhacken der Zwischenteilchen bewirken.

Eine weitere Einflussmöglichkeit auf die Form und/oder Größe der Schleifmittelteilchen hat man, indem man die Konsistenz des Ausgangsgemischs verändert. Hierzu kann es vorgesehen sein, dass bei der Bereitstellung des Ausgangsgemischs und/oder bei der Extrusion des Ausgangsgemischs Wasser, ein Peptisator, vorzugsweise Salpetersäure, und/oder Zusatzstoffe, beispielsweise eine Säure, bei der es sich ebenfalls um Salpetersäure handeln kann, und/oder Cobaltnitrat, zugesetzt werden.

Und schließlich haben natürlich auch die Geometrie und die Anzahl der beim Spanen des Extrudats zum Einsatz kommenden Schneiden einen unmittelbaren Einfluss auf die Form und/oder Größe der Zwischenteilchen bzw. Schleifmittelteilchen. Es ist in diesem Zusammenhang auch denkbar, dass Spanwerkzeuge zum Einsatz kommen, die unterschiedliche Bereiche aufweisen, in denen Schneiden in unterschiedlicher Anzahl und mit unterschiedlicher Geometrie vorgesehen sind. Durch einen Wechsel der Bereiche können in einfacher Weise die Abmessungen der Schleifmittelteilchen beeinflusst bzw. gesteuert werden.

Vorteilhafte Ausführungsformen des Verfahrens zur Herstellung von Schleifmittelteilchen bestehen weiterhin darin, dass die durch das Spanen erzeugten Zwischenteilchen im Zuge der Wärmebehandlung kalziniert werden, bevorzugt bei einer Temperatur zwischen 400 °C und 1200 °C, besonders bevorzugt bei einer Temperatur zwischen 800 °C und 1000 °C, und/oder gesintert werden, bevorzugt bei einer Temperatur zwischen 1200 °C und 1800 °C, besonders bevorzugt bei einer Temperatur zwischen 1200 °C und 1500 °C. Ergänzend kann es vorgesehen sein, dass die durch das Spanen erzeugten Zwischenteilchen im Zuge der Wärmebehandlung vor dem Kalzinieren und/oder Sintern vorgetrocknet werden, bevorzugt bei einer Temperatur zwischen 50 °C und 350 °C, besonders bevorzugt bei einer Temperatur zwischen 80 °C und 100 °C.

Wie bereits ausgeführt, weisen die Schleifmittelteilchen, welche nach dem erfindungsgemäßen Verfahren hergestellte werden, eine uneinheitliche Form und/oder Größe auf. Dabei kann es bevorzugt vorgesehen sein, dass die Schleifmittelteilchen in Längsrichtung gekrümmt und/oder um ihre Mittelachse in Längsrichtung verdreht sind.

Unter den nach dem erfindungsgemäßen Verfahren hergestellten Schleifmittelteilchen werden sich kaum Schleifmittelteilchen finden, die identisch sind. Die Schleifmittelteilchen liegen aber in einem bestimmten Längen- und Breitenband. Weist man den Schleifmittelteilchen eine Breite a, eine Höhe b und eine Länge c zu, wobei die Breite a größer oder gleich der Höhe b ist und die Länge c größer als die Breite a ist, so kann festgestellt werden, dass die Breite a größer als 10 µm und kleiner als 10 mm ist.

Wie zuvor ausgeführt, wird auch Schutz begehrt für ein Verfahren zur Herstellung eines Schleifwerkzeugs für die Bearbeitung metallischer Materialien, wobei Schleifmittelteilchen, welche nach dem erfindungsgemäßen Verfahren zur Herstellung der Schleifmittelteilchen hergestellt wurden, in eine Bindung, beispielsweise in eine keramische Bindung oder in eine Kunstharzbindung, eingelagert werden. Vorteilhafterweise ergibt sich dadurch ein Schleifwerkzeug mit einer Porosität von 2 bis 50 % und/ oder einer Dichte von 1,5 bis 4,5 g/cm³.

Weitere Einzelheiten und Vorteile der vorliegenden Erfindung werden anhand der Figurenbeschreibung unter Bezugnahme auf die Zeichnungen im Folgenden näher erläutert. Darin zeigen:
- Fig. 1: ein bevorzugtes Ausführungsbeispiel des erfindungsgemäßen Verfahrens zur Herstellung von Schleifmittelteilchen, schematisch dargestellt anhand eines Flussdiagramms,
- Fig. 2: eine weitere bevorzuge Ausführungsform des erfindungsgemäßen Verfahrens zur Herstellung von Schleifmittelteilchen,
- Fig. 3a-3c: drei vorteilhafte Spanwerkzeuge,
- Fig. 4a-4g: unterschiedliche Geometrien der beim Spanen des Extrudats zum Einsatz kommenden Schneiden in einer Querschnittsansicht,
- Fig. 5a-5e: unterschiedliche Formen von Schleifmittelteilchen,
- Fig. 6a-6c: Fotos eines Ensemble von Zwischenteilchen nach dem Spanen (Fig. 6a), nach dem Kalzinieren (Fig. 6b) und nach dem Sintern der Zwischenteilchen zu Schleifmittelteilchen (Fig. 6c),
- Fig. 7a-7c: Fotos von Schleifmittelteilchen, die gemäß einem bevorzugten Ausführungsbeispiel des erfindungsgemäßen Verfahrens zur Herstellung von Schleifmittelteilchen hergestellt wurden, in unterschiedlichen Ansichten, und
- Fig. 8a, 8b: Fotos eines beispielhaften Schleifwerkzeugs in einer perspektivischen Ansicht (Fig. 8a) und in einer Seitenansicht (Fig. 8b).

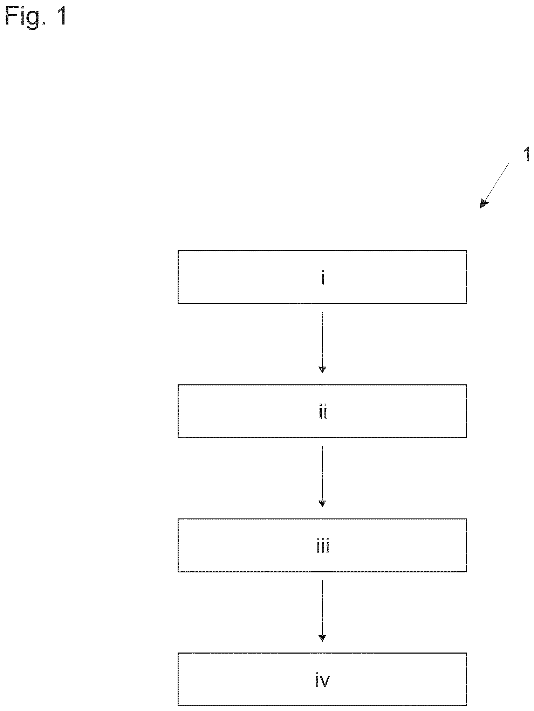

Gemäß dem in der Figur 1 anhand eines Flussdiagramms dargestellten bevorzugten Ausführungsbeispiel des erfindungsgemäßen Verfahrens zur Herstellung von Schleifmittelteilchen werden in einem ersten Verfahrensschritt ein zumindest Aluminiumhydroxid enthaltendes Ausgangsgemisch bereitgestellt, welches durch Wärmebehandlung zumindest in Aluminiumoxid überführbar ist. In einem zweiten Verfahrensschritt wird das Ausgangsgemisch zu einem Extrudat extrudiert und zwar in Form eines Strangs mit einem im Wesentlichen kreisförmigen Querschnitt oder eines Bands mit einem im Wesentlichen rechteckigen Querschnitt. In einem dritten Verfahrensschritt wird das Extrudat mit geometrisch bestimmten Schneiden geraspelt und zwar in Zwischenteilchen mit einer uneinheitlichen Form und/oder Größe. In einem vierten Verfahrensschritt findet eine Wärmebehandlung der Zwischenteilchen statt, wobei die Zwischenteilchen in Schleifmittelteilchen, welche Aluminiumoxid enthalten, überführt werden.

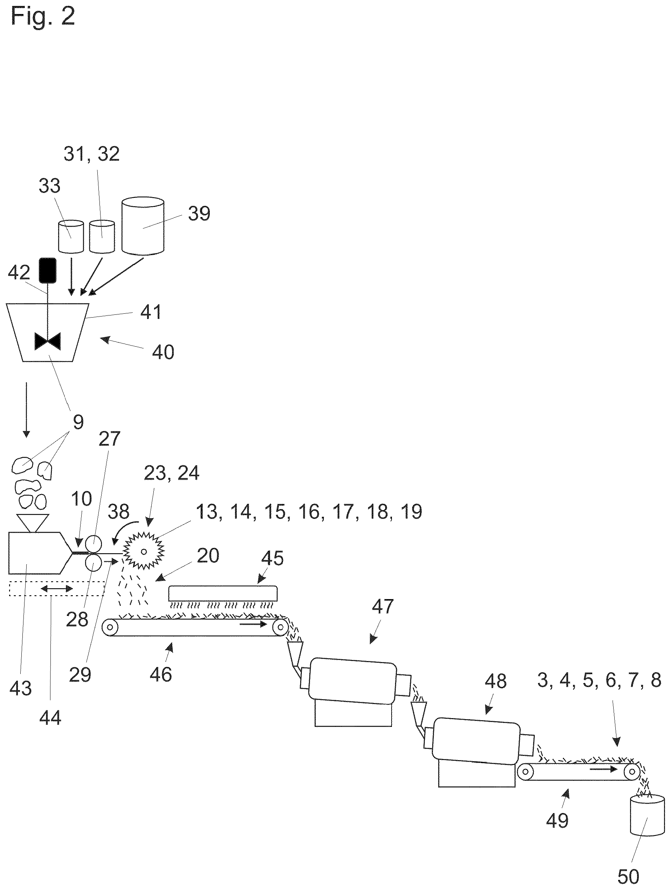

Bei dem in der Figur 2 dargestellten bevorzugten Ausführungsbeispiel des erfindungsgemäßen Verfahrens zur Herstellung von Schleifmittelteilchen wird ein Ausgangsgemisch 9 dadurch bereitgestellt, dass Böhmit 39, Wasser 31, Salpetersäure 32 und Zusatzstoffe 33, beispielsweise Cobaltnitrat, in einen Mischer 40 eingebracht werden, wobei der Mischer 40 im Wesentlichen aus einem Mischbehälter 41 und einer darin angeordneten Rotationseinheit 42 besteht.

Das auf diese Weise bereitgestellte Ausgangsgemisch 9 wird in weiterer Folge einer Extrusionsvorrichtung 43 zugeführt.

Das die Extrusionsvorrichtung 43 verlassende Extrudat 10 weist eine bestimmte Querschnittsform auf, welche mittels zweier gegenläufiger rotierender Walzen 27 und 28 verändert werden kann. Schematisch angedeutet ist eine Reduktion der Dicke des Extrudats 10.

Das Extrudat 10 bzw. das die Walzen 27 und 28 verlassende Extrudat 10 wird in weiterer Folge mit einer bestimmten Zustellgeschwindigkeit 29 einer Spanvorrichtung in Form wenigstens eines Rotationskörpers zugeführt, wobei der Rotationskörper beispielsweise in Form einer Trommel 23 oder Scheibe 24, an dessen Oberfläche die geometrisch bestimmten Schneiden ausgebildet sind, erfolgt, vorzugsweise wobei die Schneiden durch Stanzen ausgebildet wurden. Der Rotationskörper 23, 24 wird mit einer veränderbaren Rotationsgeschwindigkeit 38 betrieben.

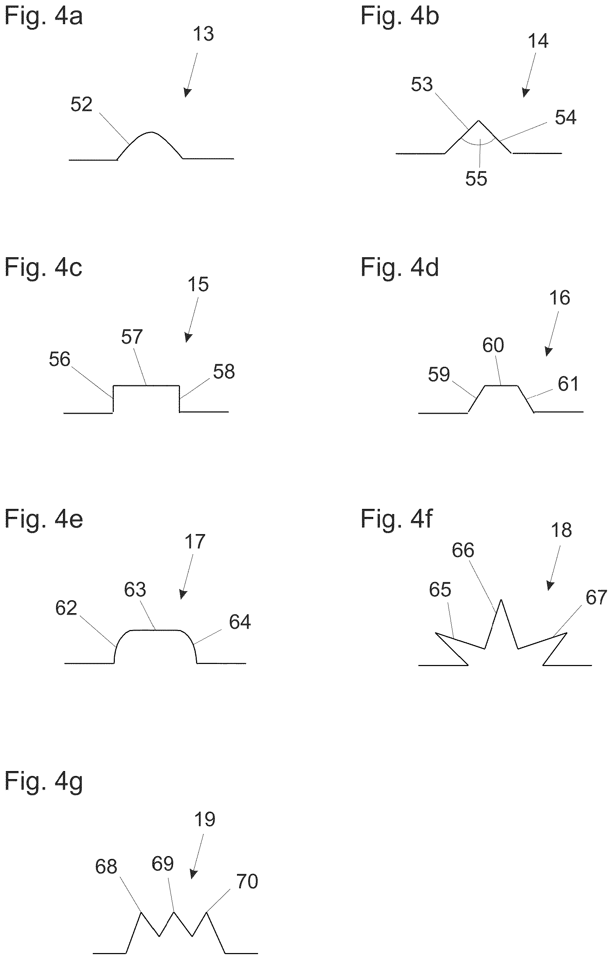

Es kann vorgesehen sein, dass die Extrusionsvorrichtung 43 und die nachfolgenden Walzen 27, 28 auf einer Plattform 44 angeordnet sind, welche in eine oszillierende Bewegung versetzt werden kann. Diese oszillierende Bewegung ist in der Figur 2 mittels eines Doppelpfeils schematisch angedeutet. Auf die Geometrie der Schneiden der Spanvorrichtung 23, 24 wird anhand der Figuren 4a bis 4g näher eingegangen.

Die durch das Raspeln des Extrudats erzeugten Zwischenteilchen 20 liegen in einer uneinheitlichen Form und/oder Größe vor. Die Zwischenteilchen 20 werden mittels einer Bandführung 46 einer Vortrocknungseinrichtung 45 zugeführt.

Anschließend werden die vorgetrockneten Zwischenteilchen 20 in einen Kalzinierofen 47 überführt, in welchem eine Kalzinierung der Zwischenteilchen 20 erfolgt.

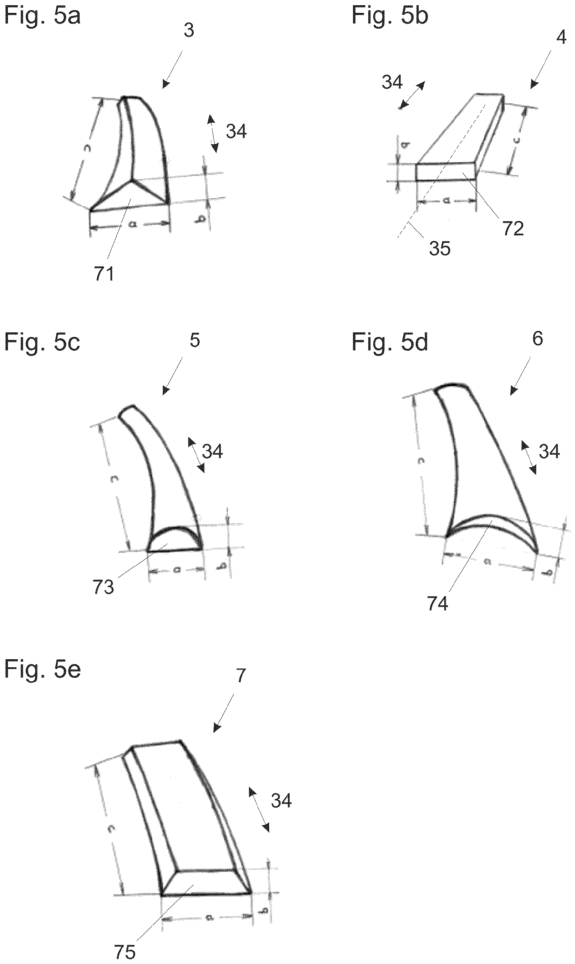

Nach dem Kalzinieren schließt sich ein Sinterofen 48 an, in welchem die Zwischenteilchen 20 zu Schleifteilchen 3, 4, 5, 6, 7, 8 gesintert werden. Auf die Form und/oder Größe der auf diese Weise hergestellten Schleifmittelteilchen 3, 4, 5, 6, 7, 8 wird anhand der Figuren 5a bis 7c näher eingegangen.

Anstelle von drei räumlich getrennten aufeinander folgenden Einrichtungen 45, 47 und 48 zur Wärmebehandlung kann auch eine integrierte Einrichtung zur Wärmebehandlung, beispielsweise ein Tunnelofen, mit unabhängig voneinander steuerbaren Temperaturzonen zum Einsatz kommen.

Die gesinterten Schleifmittelteilchen 3, 4, 5, 6, 7, 8 werden auf einer Bandführung 49 positioniert. Während des Transports mittels dieser Bandführungseinrichtung 49 werden die durch das Sintern erzeugten Schleifmittelteilchen 3, 4, 5, 6, 7, 8 abgekühlt.

Die fertig hergestellten Schleifmittelteilchen 3, 4, 5, 6, 7, 8 werden sodann in eine Speichervorrichtung 50 überführt und stehen einer Weiterverarbeitung, beispielsweise für ein Verfahren zur Herstellung eines Schleifwerkzeugs für die Bearbeitung metallischer Materialien, zur Verfügung.

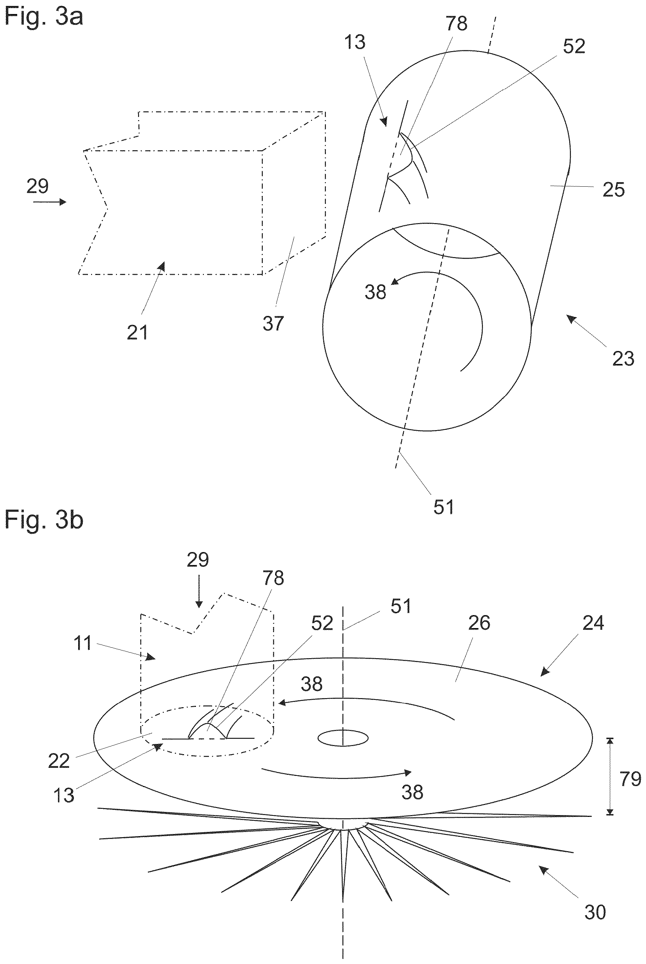

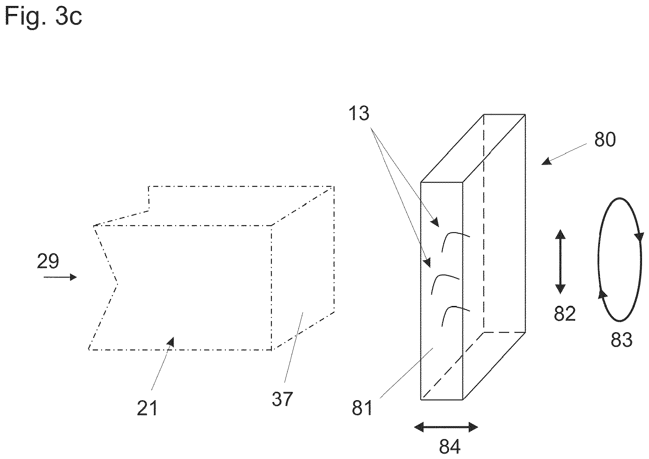

Die Figuren 3a, 3b und 3c zeigen drei mögliche Konfigurationen eines Spanwerkzeugs zur Durchführung des dritten Verfahrensschritts, bei welchem das Extrudat mit geometrisch bestimmten Schneiden gespant, vorzugsweise geraspelt, wird in Zwischenteilchen mit einer uneinheitlichen Form und/oder Größe.

Bei dem in der Figur 3a dargestellten Ausführungsbeispiel wird das Extrudat 10 mit einer bestimmten Zustellgeschwindigkeit 29 dem Spanwerkzeug 23 in Form eines Bands 21 mit einem im Wesentlichen rechteckigen Querschnitt 37 zugeführt. Im Falle der Figur 3b wird das Extrudat 10 der Spanvorrichtung 24 in Form eines Strangs 11 mit einem im Wesentlichen kreisförmigen Querschnitt 22 zugeführt.

Sowohl im Falle der Figur 3a als auch im Falle der Figur 3b ist das Spanwerkzeug als Rotationskörper ausgebildet, wobei es sich im Falle der Figur 3a bei dem Rotationskörper um eine Trommel 23 und im Falle der Figur 3b um eine Scheibe 24 handelt.

An der im Wesentlichen zylinderförmigen Oberfläche 25 des Rotationskörpers 23 im Falle der Figur 3a bzw. an der im Wesentlichen kreisringförmigen Oberfläche 26 der Scheibe 24 im Falle der Figur 3b sind die geometrisch bestimmten Schneiden ausgebildet, wobei die Schneiden durch Stanzen ausgebildet wurden. Im Prinzip kann man sich diese Spanvorrichtungen 23 und 24 als eine Art Käsereibe, wie sie zum Reiben von Käse eingesetzt wird, vorstellen.

In den Figuren 3a und 3b ist jeweils nur eine einzige solche geometrisch bestimmte Schneide 13 schematisch angedeutet. Es handelt sich jeweils um eine von der Oberfläche 25 bzw. 26 abstehende Auswölbung mit einer Schneidkante 52, welche bei einer Rotation der Spanvorrichtungen 23 bzw. 24 mit einer bestimmten Rotationsgeschwindigkeit 38 um eine Rotationsachse 51 auf das zu zerspanende Extrudat 10 trifft und dabei einen Teil des Extrudats abträgt. Dieser abgetragene Teil des Extrudats tritt in eine Öffnung 78 unterhalb der Auswölbung ein und gelangt so ins Innere der Trommel 23 bzw. auf die Unterseite der Scheibe 24.

In einem definierten Abstand 79 zum Rotationskörper 23, 24 kann - wie dies im Falle der Figur 3b schematisch angedeutet ist - eine zusätzliche Schneidevorrichtung 30 angeordnet sein, welche die Zwischenteilchen auf eine bestimmte Länge begrenzt. Die Schneidevorrichtung 30 kann ebenfalls eine Rotationsbewegung ausführen oder aber genauso wie die Spanvorrichtung anstelle einer Rotationsbewegung eine oszillierende Bewegung in einer Ebene ausführen.

Eine Schneideeinrichtung kann auch bei den Ausführungsbeispielen gemäß den Figuren 3a und 3c vorgesehen sein, wobei es sich im Falle des Ausführungsbeispiels gemäß Figur 3a anbietet, die Schneidvorrichtung im Inneren der Trommel 23 anzuordnen.

Bei dem in der Figur 3c dargestellten Ausführungsbeispiel wird das Extrudat 10 mit einer bestimmten Zustellgeschwindigkeit 29 dem Spanwerkzeug 80 in Form eines Bands 21 mit einem im Wesentlichen rechteckigen Querschnitt 37 zugeführt. In diesem Fall ist das Spanwerkzeug 80 als ein im Wesentlichen plattenförmiger Körper ausgebildet, an dessen Oberfläche 81 die geometrisch bestimmten Schneiden 13, von denen in der Figur exemplarisch drei Exemplare angedeutet sind, ausgebildet sind. Der plattenförmige Körper 80 kann zumindest beim Spanen des Extrudats 10 eine oszillierende Bewegung ausführen, wobei diese Bewegung in Zuführrichtung des Extrudats 10 und/oder quer dazu erfolgen kann. Der Körper 80 kann bei der oszillierenden Bewegung linear oder kreisförmig oder elliptisch geführt werden. Drei mögliche Bewegungsarten sind in der Figur mit den Doppelpfeilen 82 und 84 und einer Ellipse 83 mit Pfeilen angedeutet.

Die Figuren 4a bis 4g zeigen Beispiele von bevorzugten Geometrien der beim Spanen des Extrudats zum Einsatz kommenden Schneiden:
Im Falle der Figur 4a weist die Schneide 13 eine im Wesentlichen parabelförmige Schnittkante 52 auf.

Im Falle der Figur 4b weist die Schneide 14 eine Schneidekante auf, welche im Wesentlichen aus zwei unter einem Winkel 55 zueinander angeordneten linearen Kanten 53 und 54 gebildet wird. Auf diese Weise ergibt sich in etwa eine dreieckige Schneidekante.

Im Falle der Figur 4c weist die Schneide 15 eine aus drei unter einem rechten Winkel zueinander angeordneten linearen Kanten 56, 57, 58 gebildete Schneidekante auf. Auf diese Weise ergibt sich eine im Wesentlichen rechteckige Schneidekante.

Im Falle der Figur 4d weist die Schneide 16 eine aus drei linearen Abschnitten 59, 60 und 61 gebildete in etwa trapezförmige Schneidekante auf.

Im Falle der Figur 4e weist die Schneide 17 eine im Wesentlichen rechteckige Schneidekante auf, wobei die Ecken dieses Rechtecks abgerundet sind. Gedanklich lässt sich die Schneidekante in drei Abschnitte unterteilen und zwar in einen ersten gebogenen Abschnitt 62, einen sich daran anschließenden linearen Abschnitt 63 und einen wiederum gebogenen Abschnitt 64, welcher spiegelsymmetrisch zu dem Abschnitt 62 abgebildet ist.

Im Falle der Figur 4f weist die Schneide 18 drei in unterschiedliche Raumrichtungen weisende Spitzen 65, 66 und 67 auf, wodurch sich eine im Wesentlichen sternförmige Schnittkante ergibt.

Im Falle der Figur 4g weist die Schneide 19 ebenfalls drei Spitzen 68, 69, 70 auf, die im Gegensatz zu dem Ausführungsbeispiel gemäß Figur 4f jedoch nicht in unterschiedliche Raumrichtungen, sondern allesamt in dieselbe Raumrichtung weisen. Auf diese Weise ergibt sich eine im Wesentlichen kronenförmige Schneidekante.

Allgemein sei noch darauf hingewiesen, dass es sich bei den in den Figuren 4a bis 4g dargestellten Geometrien nur um Beispiele für die geometrisch bestimmten Schneiden handelt. Weitere Ausführungsformen können eingesetzt werden.

In den Figuren 5a bis 5e sind schematisch unterschiedliche Geometrien von mittels des Verfahrens herstellbaren Schleifmittelteilchen 3, 4, 5, 6, 7 dargestellt. Die Schleifmittelteilchen 3, 4, 5, 6, 7 weisen jeweils eine Breite a, eine Höhe b und eine Länge c auf, wobei die Breite a größer oder gleich der Höhe b ist, die Länge c länger als die Breite a ist und die Breite a größer als 10 µm und kleiner als 10 mm ist.

Im Falle der Figur 5a weist das Schleifmittelteilchen 3 eine dreieckige Querschnittsfläche 71 auf. Im Falle der Figur 5b weist das Schleifmittelteilchen 4 eine im Wesentlichen rechteckige Querschnittsfläche 72 auf. Im Falle der Figur 5c weist das Schleifmittelteilchen 5 eine im Wesentlichen halbkreisförmige Querschnittsfläche 71 auf. Im Falle der Figur 5d weist das Schleifmittelteilchen 6 eine im Wesentlichen mondsichelförmige Querschnittsfläche 74 auf und im Falle der Figur 5e weist das Schleifmittelteilchen 7 eine im Wesentlichen trapezförmige Querschnittsfläche 75 auf.

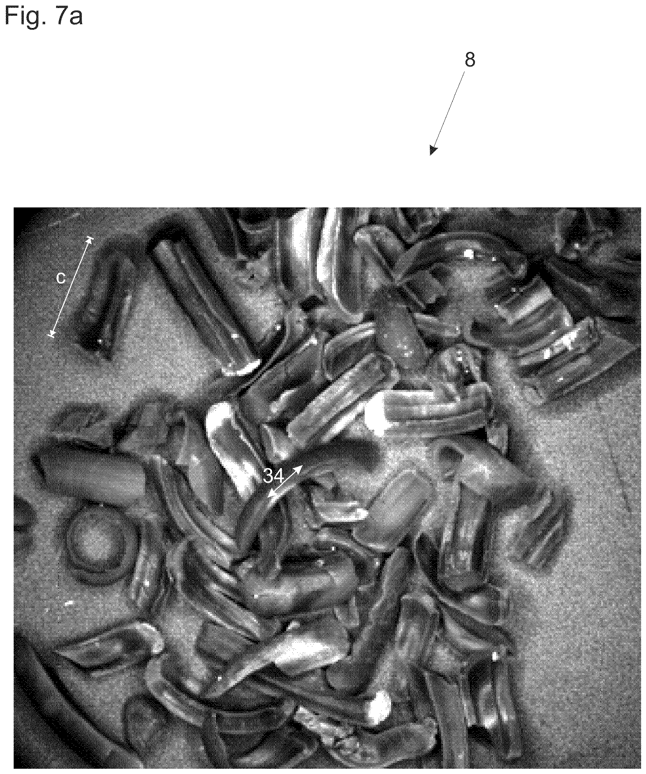

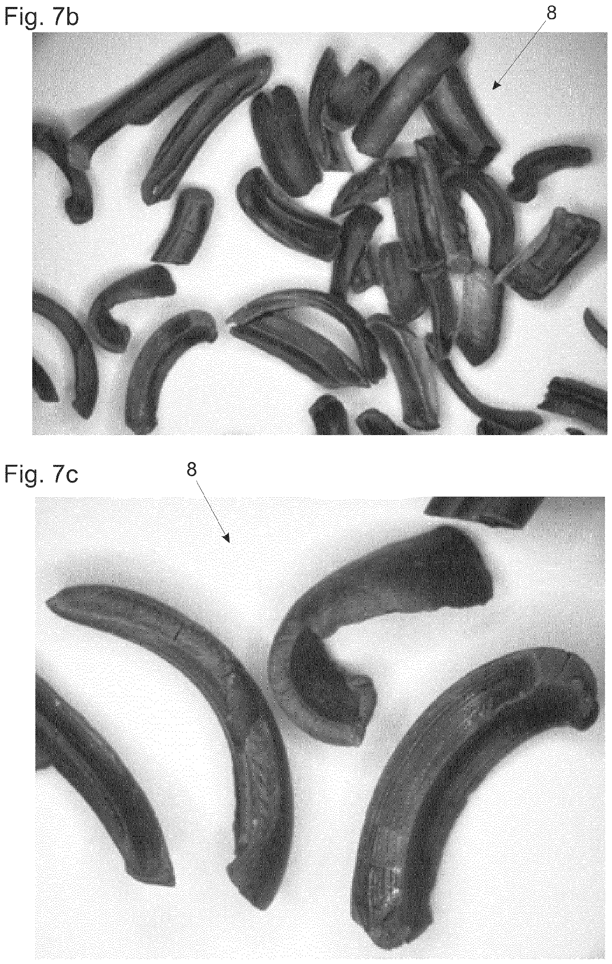

Im Falle der Schleifmittelteilchen 3, 5, 6, 7 sind die Schleifmittelteilchen in Längsrichtung 34 gekrümmt. Darüber hinaus können die Schleifmittelteilchen auch noch um ihre Mittelachse 35 in Längsrichtung 34 verdreht sein. Solche Ausführungsformen sind auf den nachfolgend beschriebenen Fotos gemäß den Figuren 7a bis 7c zu sehen.

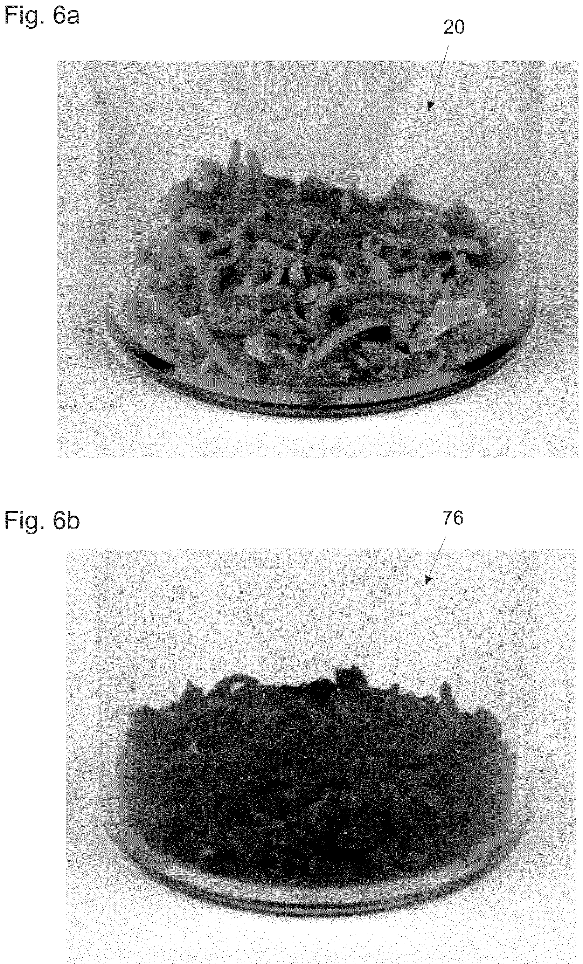

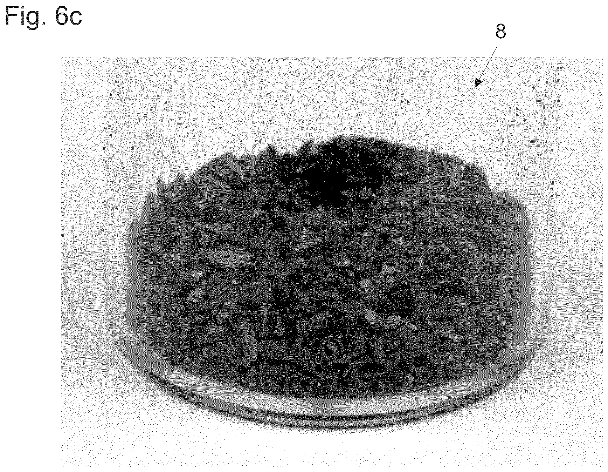

In den Figuren 6a bis 6c sind die unterschiedlichen Verfahrensstadien fotografisch dargestellt und zwar in Form der nach dem Spanen des Extrudats vorliegenden Zwischenteilchen 20 (Figur 6a), in Form der nach einem Kalzinierungsschritt vorliegenden Zwischenteilchen 76 (Figur 6b) und in Form der nach dem Sintern vorliegenden Schleifmittelteilchen 8 (Figur 6c). Dabei kann man feststellen, dass sich durch das Kalzinieren und Sintern der Zwischenteilchen 20 die Farbgebung ändert. Weiterhin kann festgestellt werden, dass die Vortrocknung, Kalzinierung und Sinterung zu einem Materialschrumpf führen.

Die Figuren 7a bis 7c zeigen drei Fotos von Schleifmittelteilchen 8, wobei die Schleifmittelteilchen 8 in unterschiedlichen Vergrößerungsstufen dargestellt sind. Grundsätzlich weisen die Schleifmittelteilchen 8 eine Querschnittsform auf, welche in etwa der Querschnittsform der in der Figur 5d dargestellten Schleifmitteilteilchen 6 entsprechen. Die Schleifmittelteilchen 8 weisen unterschiedliche Längen c auf. Darüber hinaus sind die Schleifmittelteilchen 8 unterschiedlich stark in Längsrichtung 34 gekrümmt. Gleichzeitig sind manche Schleifmittelteilchen 8 auch noch um ihre Mittelachse 35 in Längsrichtung 34 verdreht. Allgemein ist festzustellen, dass die Schleifmittelteilchen 8 mit einer uneinheitlichen Form und Größe vorliegen.

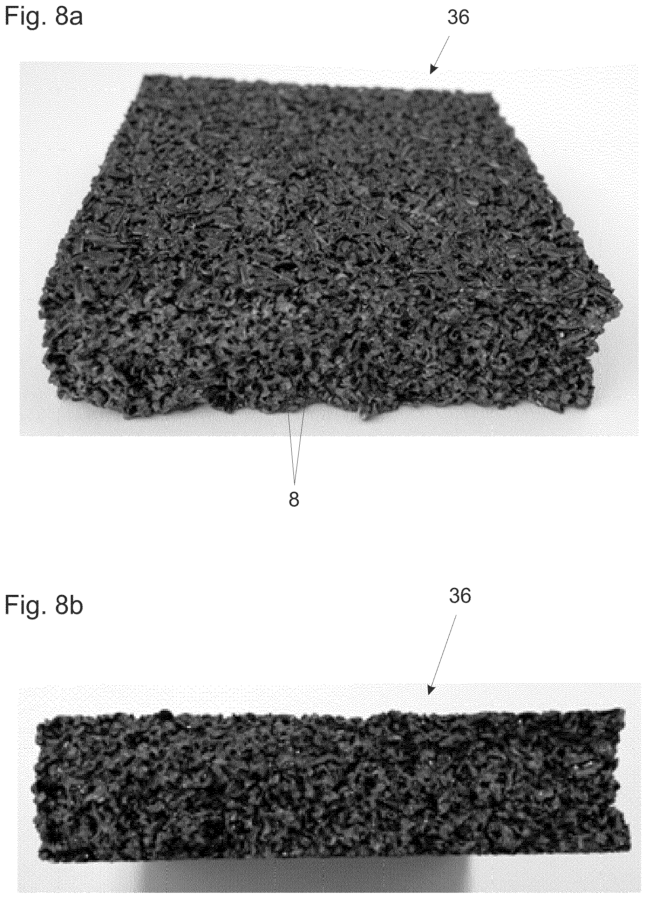

Die Figuren 8a und 8b zeigen ein Schleifwerkzeug 36, welches aus einer Vielzahl der Schleifmittelteilchen 8 gebildet wurde, indem die Schleifmittelteilchen 8 in eine Bindung, beispielsweise in eine keramische Bindung oder in eine Kunstharzbindung eingelagert wurden. Das Schleifwerkzeug 36 weist dabei eine Porosität von 2 bis 50% und/oder eine Dichte von 1,5 bis 4,5 g/cm³ auf. Die unregelmäßige Geometrie der Schleifmittelteilchen 8 bedingt einen porösen Aufbau und eine offene Struktur des Schleifwerkzeug 36 mit ausgezeichneten Schleifleistungen. Das Schleifwerkzeug 36 eignet sich insbesondere für die Bearbeitung metallischer Materialien.

## Patentansprüche

1. Verfahren (1) zur Herstellung von Schleifmittelteilchen (3, 4, 5, 6, 7, 8), mit den folgenden Verfahrensschritten:
i. Bereitstellen eines zumindest Aluminiumhydroxid enthaltenden Ausgangsgemischs (9), welches durch Wärmebehandlung zumindest in Aluminiumoxid überführbar ist,
ii. Extrusion des Ausgangsgemischs (9) zu einem Extrudat (10), vorzugsweise in Form eines Strangs (11) mit einem im Wesentlichen kreisförmigen Querschnitt (22) oder eines Bands (21) mit einem im Wesentlichen rechteckigen Querschnitt (37),
iii. Spanen des Extrudats (10) mit geometrisch bestimmten Schneiden (13, 14, 15, 16, 17, 18, 19), vorzugsweise Raspeln, in Zwischenteilchen (20) mit einer uneinheitlichen Form und/oder Größe,
iv. Wärmebehandlung der Zwischenteilchen (20), wobei die Zwischenteilchen in Schleifmittelteilchen (3, 4, 5, 6, 7, 8), welche Aluminiumoxid enthalten, wobei die Schleifmittelteilchen (3, 4, 5, 6, 7, 8) eine uneinheitliche Form und/oder Größe aufweisen, überführt werden,
wobei das Spanen des Extrudats (10) mittels wenigstens eines Rotationskörpers (23, 24), vorzugsweise in Form einer Trommel (23) oder Scheibe (24), wobei der Rotationskörper (23, 24) mit einer veränderbaren Rotationsgeschwindigkeit (38) betrieben wird und/oder wenigstens eines plattenförmigen Körpers (80) erfolgt, wobei an der Oberfläche (25, 26, 81) des wenigstens einen Rotationskörpers (23, 24) bzw. plattenförmigen Körpers (80) die geometrisch bestimmten Schneiden (13, 14, 15, 16, 17, 18, 19) ausgebildet sind, vorzugsweise wobei die Schneiden (13, 14, 15, 16, 17, 18, 19) durch Stanzen ausgebildet wurden.

2. Verfahren (1) nach Anspruch 1, wobei der wenigstens eine Rotationskörper (23, 24) bzw. plattenförmige Körper (80) zumindest beim Spanen des Extrudats (10) eine oszillierende Bewegung ausführt.

3. Verfahren (1) nach einem der Ansprüche 1 oder 2, wobei das Extrudat (10) eine bestimmte Querschnittsform aufweist, und die Querschnittsform vor dem Spanen verändert wird, vorzugsweise mittels gegenläufig rotierender Walzen (27, 28).

4. Verfahren (1) nach einem der Ansprüche 1 bis 3, wobei das Extrudat (10) dem Verfahrensschritt des Spanens mit einer veränderbaren Zustellgeschwindigkeit (29) und/oder in einer oszillierenden Bewegung zugeführt wird.

5. Verfahren (1) nach einem der Ansprüche 1 bis 4, wobei die durch das Spanen erzeugten Zwischenteilchen (20) im Zuge der Wärmebehandlung
- kalziniert werden, bevorzugt bei einer Temperatur zwischen 400 °C und 1200 °C, besonders bevorzugt bei einer Temperatur zwischen 800 °C und 1000 °C, und/oder
- gesintert werden, bevorzugt bei einer Temperatur zwischen 1200 °C und 1800 °C, besonders bevorzugt bei einer Temperatur zwischen 1200 °C und 1500 °C.

6. Verfahren (1) nach Anspruch 5, wobei die durch das Spanen erzeugten Zwischenteilchen (20) im Zuge der Wärmebehandlung vor dem Kalzinieren und/oder Sintern vorgetrocknet werden, bevorzugt bei einer Temperatur zwischen 50 °C und 350 °C, besonders bevorzugt bei einer Temperatur zwischen 80 °C und 100 °C.

7. Verfahren (1) nach einem der Ansprüche 1 bis 6, wobei die durch das Spanen erzeugten Zwischenteilchen (20) vor der Wärmebehandlung in einem weiteren Verfahrensschritt, vorzugsweise mittels einer Schneidevorrichtung (30), zerkleinert werden.

8. Verfahren (1) nach einem der Ansprüche 1 bis 7, wobei die nach der Wärmebehandlung vorliegenden Schleifmittelteilchen (3, 4, 5, 6, 7, 8) abgekühlt werden.

9. Verfahren (1) nach einem der Ansprüche 1 bis 8, wobei bei der Bereitstellung des Ausgangsgemischs (9) und/oder bei der Extrusion des Ausgangsgemischs (9) Wasser (31), ein Peptisator, vorzugsweise Salpetersäure (32), und/oder Zusatzstoffe (33), beispielsweise eine Säure und/oder Cobaltnitrat, zugesetzt werden.

10. Schleifmittelteilchen (3, 4, 5, 6, 7, 8), hergestellt nach einem Verfahren (1) nach einem der Ansprüche 1 bis 9, wobei die Schleifmittelteilchen (3, 4, 5, 6, 7, 8) eine uneinheitliche Form und/oder Größe aufweisen.

11. Schleifmittelteilchen (3, 4, 5, 6, 7, 8) nach Anspruch 10, wobei die Schleifmittelteilchen (3, 4, 5, 6, 7, 8) in Längsrichtung (34) gekrümmt und/oder um ihre Mittelachse (35) in Längsrichtung (34) verdreht sind.

12. Schleifmittelteilchen (3, 4, 5, 6, 7, 8) nach Anspruch 10 oder 11, wobei die Schleifmittelteilchen (3, 4, 5, 6, 7, 8) eine Breite a, eine Höhe b und eine Länge c aufweisen, die Breite a größer oder gleich der Höhe b ist, die Länge c größer als die Breite a ist, und die Breite a größer als 10 µm und kleiner als 10 mm ist.

13. Verfahren zur Herstellung eines Schleifwerkzeugs (36) für die Bearbeitung metallischer Materialien, wobei Schleifmittelteilchen (3, 4, 5, 6, 7, 8), welche nach einem Verfahren (1) nach einem der Ansprüche 1 bis 9 hergestellt wurden, in eine Bindung, beispielsweise in eine keramische Bindung oder eine Kunstharzbindung, eingelagert werden.

14. Schleifwerkzeug (36), hergestellt nach einem Verfahren nach Anspruch 13, wobei das Schleifwerkzeug (36) eine Porosität von 2 bis 50% und/oder eine Dichte von 1,5 bis 4,5 g/cm³ aufweist.

## Claims

1. Method (1) for the production of abrasive particles (3, 4, 5, 6, 7, 8), with the following method steps:
i. providing a starting mixture (9), which contains at least aluminium hydroxide and which can be converted at least into aluminium oxide by heat treatment,
ii. extruding the starting mixture (9) to form an extrudate (10), preferably in the form of a strand (11) with a substantially circular cross section (22) or a ribbon (21) with a substantially rectangular cross section (37),
iii. cutting the extrudate (10) with geometrically determined cutting edges (13, 14, 15, 16, 17, 18, 19), preferably graters, into intermediate particles (20) with a non-uniform shape and/or size,
iv. heat-treating the intermediate particles (20), wherein the intermediate particles are converted into abrasive particles (3, 4, 5, 6, 7, 8) which contain aluminium oxide, wherein the abrasive particles (3, 4, 5, 6, 7, 8) have a non-uniform shape and/or size,
wherein the cutting of the extrudate (10) is effected by means of at least one rotating body (23, 24), preferably in the shape of a drum (23) or disc (24), wherein the rotating body (23, 24) is operated at a variable rotational speed (38), and/or at least one plate-shaped body (80), wherein the geometrically determined cutting edges (13, 14, 15, 16, 17, 18, 19) are formed on the surface (25, 26, 81) of the at least one rotating body (23, 24) or plate-shaped body (80), preferably wherein the cutting edges (13, 14, 15, 16, 17, 18, 19) were formed by punching.

2. Method (1) according to claim 1, wherein the at least one rotating body (23, 24) or plate-shaped body (80) performs an oscillating movement at least during the cutting of the extrudate (10).

3. Method (1) according to one of claims 1 or 2, wherein the extrudate (10) has a particular cross-sectional shape, and the cross-sectional shape is altered before the cutting, preferably by means of counter-rotating rollers (27, 28).

4. Method (1) according to one of claims 1 to 3, wherein the extrudate (10) is supplied to the cutting method step at a variable infeed speed (29) and/or in an oscillating movement.

5. Method (1) according to one of claims 1 to 4, wherein in the course of the heat treatment the intermediate particles (20) generated by the cutting
- are calcined, preferably at a temperature of between 400°C and 1200°C, particularly preferably at a temperature of between 800°C and 1000°C, and/or
- are sintered, preferably at a temperature of between 1200°C and 1800°C, particularly preferably at a temperature of between 1200°C and 1500°C.

6. Method (1) according to claim 5, wherein in the course of the heat treatment, before the calcining and/or sintering, the intermediate particles (20) generated by the cutting are predried, preferably at a temperature of between 50°C and 350°C, particularly preferably at a temperature of between 80°C and 100°C.

7. Method (1) according to one of claims 1 to 6, wherein the intermediate particles (20) generated by the cutting are comminuted before the heat treatment in a further method step, preferably by means of a cutting device (30) .

8. Method (1) according to one of claims 1 to 7, wherein the abrasive particles (3, 4, 5, 6, 7, 8) present after the heat treatment are cooled.

9. Method (1) according to one of claims 1 to 8, wherein water (31), a peptizer, preferably nitric acid (32), and/or additives (33), for example an acid and/or cobalt nitrate, are added during the provision of the starting mixture (9) and/or during the extrusion of the starting mixture (9).

10. Abrasive particles (3, 4, 5, 6, 7, 8), produced according to a method (1) according to one of claims 1 to 9, wherein the abrasive particles (3, 4, 5, 6, 7, 8) have a non-uniform shape and/or size.

11. Abrasive particles (3, 4, 5, 6, 7, 8) according to claim 10, wherein the abrasive particles (3, 4, 5, 6, 7, 8) are curved in the longitudinal direction (34) and/or twisted around their centre axis (35) in the longitudinal direction (34).

12. Abrasive particles (3, 4, 5, 6, 7, 8) according to claim 10 or 11, wherein the abrasive particles (3, 4, 5, 6, 7, 8) have a width a, a height b and a length c, the width a is greater than or equal to the height b, the length c is greater than the width a, and the width a is greater than 10 um and smaller than 10 mm.

13. Method for the production of a grinding tool (36) for machining metallic materials, wherein abrasive particles (3, 4, 5, 6, 7, 8) which were produced according to a method (1) according to one of claims 1 to 9 are incorporated into a bond, for example into a ceramic bond or a resinoid bond.

14. Grinding tool (36), produced according to a method according to claim 13, wherein the grinding tool (36) has a porosity of from 2 to 50% and/or a density of from 1.5 to 4.5 g/cm3.

## Revendications

1. Procédé (1) de fabrication de particules abrasives (3, 4, 5, 6, 7, 8), avec les étapes de procédé suivantes :
i. fourniture d'un mélange de départ (9) contenant au moins de l'hydroxyde d'aluminium, lequel peut être converti au moins en oxyde d'aluminium par traitement thermique ;
ii. extrusion du mélange de départ (9) en un extrudat (10), de préférence sous la forme d'un boyau (11) avec une section transversale (22) sensiblement circulaire ou d'une bande (21) avec une section transversale (37) sensiblement rectangulaire,
iii. découpage de l'extrudat (10) avec des tranchants (13, 14, 15, 16, 17, 18, 19) géométriquement définis, de préférence des râpes, en particules intermédiaires (20) avec une forme et/ou une taille non homogènes,
iv. traitement thermique des particules intermédiaires (20), dans lequel les particules intermédiaires sont converties en particules abrasives (3, 4, 5, 6, 7, 8), lesquelles contiennent de l'oxyde d'aluminium, dans lequel les particules abrasives (3, 4, 5, 6, 7, 8) présentent une forme et/ou une taille non homogènes,
dans lequel le découpage de l'extrudat (10) est effectué au moyen d'au moins un corps de rotation (23, 24), de préférence sous la forme d'un tambour (23) ou d'un disque (24), dans lequel le corps de rotation (23, 24) fonctionne à une vitesse de rotation (38) modifiable, et/ou au moyen d'un corps en forme de plaque (80), dans lequel les tranchants (13, 14, 15, 16, 17, 18, 19) définis géométriquement sont réalisés sur la surface (25, 26, 81) de l'au moins un corps de rotation (23, 24) ou du corps en forme de plaque (80), de préférence dans lequel les tranchants (13, 14, 15, 16, 17, 18, 19) ont été réalisés par estampage.

2. Procédé (1) selon la revendication 1, dans lequel l'au moins un corps de rotation (23, 24) ou le corps en forme de plaque (80) exécute un déplacement oscillant au moins lors du découpage de l'extrudat (10).

3. Procédé (1) selon l'une quelconque des revendications 1 ou 2, dans lequel l'extrudat (10) présente une forme de section transversale définie, et la forme de section transversale est modifiée avant le découpage, de préférence au moyen de cylindres (27, 28) tournant en sens inverse.

4. Procédé (1) selon l'une quelconque des revendications 1 à 3, dans lequel l'extrudat (10) est amené à l'étape de procédé du découpage avec une vitesse d'approche (29) modifiable et/ou avec un déplacement oscillant.

5. Procédé (1) selon l'une quelconque des revendications 1 à 4, dans lequel les particules intermédiaires (20) produites par le découpage sont, dans le cadre du traitement thermique
- calcinées, de manière préférée à une température entre 400 °C et 1200 °C, de manière particulièrement préférée à une température entre 800 °C et 1000 °C, et/ou
- frittées, de manière préférée à une température entre 1200 °C et 1800 °C, de manière particulièrement préférée à une température entre 1200 °C et 1500 °C.

6. Procédé (1) selon la revendication 5, dans lequel les particules intermédiaires (20) produites par le découpage sont séchées au préalable avant la calcination et/ou le frittage dans le cadre du traitement thermique, de manière préférée à une température entre 50 °C et 350 °C, de manière particulièrement préférée à une température entre 80 °C et 100 °C.

7. Procédé (1) selon l'une quelconque des revendications 1 à 6, dans lequel les particules intermédiaires (20) produites par le découpage sont fragmentées avant le traitement thermique dans une autre étape de procédé, de préférence au moyen d'un dispositif de découpage (30).

8. Procédé (1) selon l'une quelconque des revendications 1 à 7, dans lequel les particules abrasives (3, 4, 5, 6, 7, 8) présentes après le traitement thermique sont refroidies.

9. Procédé (1) selon l'une quelconque des revendications 1 à 8, dans lequel de l'eau (31), un agent peptisant, de préférence de l'acide nitrique (32), et/ou des additifs (33), par exemple un acide et/ou du nitrate de cobalt, sont ajoutés lors de la préparation du mélange de départ (9) et/ou lors de l'extrusion du mélange de départ (9).

10. Particules abrasives (3, 4, 5, 6, 7, 8) fabriquées selon un procédé (1) selon l'une quelconque des revendications 1 à 9, dans lesquelles les particules abrasives (3, 4, 5, 6, 7, 8) présentent une forme et/ou une taille non homogène.

11. Particules abrasives (3, 4, 5, 6, 7, 8) selon la revendication 10, dans lesquelles les particules abrasives (3, 4, 5, 6, 7, 8) sont incurvées dans le sens longitudinal (34) et/ou sont tournées dans le sens longitudinal (34) le long de leur axe central (35).

12. Particules abrasives (3, 4, 5, 6, 7, 8) selon la revendication 10 ou 11, dans lesquelles les particules abrasives (3, 4, 5, 6, 7, 8) présentent une largeur a, une hauteur b et une longueur c, la largeur a est supérieure ou égale à la hauteur b, la longueur c est supérieure à la largeur a, et la largeur a est supérieure à 10 µm et est inférieure à 10 mm.

13. Procédé de fabrication d'un outil de rectification (36) pour l'usinage de matériaux métalliques, dans lequel des particules abrasives (3, 4, 5, 6, 7, 8), lesquelles ont été fabriquées selon un procédé (1) selon l'une quelconque des revendications 1 à 9, sont incorporées dans un liant, par exemple dans un liant en céramique ou un liant en résine synthétique.

14. Outil de rectification (36) fabriqué selon un procédé selon la revendication 13, dans lequel l'outil de rectification (36) présente une porosité de 2 à 50 % et/ou une densité de 1,5 à 4,5 g/cm³.
